(19) Europäisches Patentamt
European Patent Office
Office européen des brevets

(11) EP 3 390 529 B1

(12) FASCICULE DE BREVET EUROPEEN

(45) Date de publication et mention de la délivrance du brevet:
**19.07.2023 Bulletin 2023/29**

(21) Numéro de dépôt: **16825526.3**

(22) Date de dépôt: **15.12.2016**

(51) Classification Internationale des Brevets (IPC):
***C08L 23/10*** *(2006.01)*

(52) Classification Coopérative des Brevets (CPC):
(C-Sets disponibles)
**C08L 23/10; C08K 5/01;** C08L 2203/202;
C08L 2666/30 (Cont.)

(86) Numéro de dépôt international:
**PCT/FR2016/053480**

(87) Numéro de publication internationale:
**WO 2017/103511 (22.06.2017 Gazette 2017/25)**

# (54) COMPOSITION POLYMÈRE PRÉSENTANT UNE RÉSISTANCE AU BLANCHIMENT SOUS CONTRAINTE AMÉLIORÉE

POLYMERZUSAMMENSETZUNG MIT GRÖSSERER WIDERSTANDSFÄHIGKEIT GEGEN WEISSBRUCH

POLYMER COMPOSITION HAVING GREATER RESISTANCE TO STRESS WHITENING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562790**

(43) Date de publication de la demande:
**24.10.2018 Bulletin 2018/43**

(73) Titulaire: **Nexans**
**92400 Courbevoie (FR)**

(72) Inventeurs:
- **PEREGO, Gabriele**
**20144 Milan (IT)**
- **MAZEL, Christelle**
**38300 Ruy (FR)**
- **MEYER, Matthias**
**23552 Lübeck (DE)**
- **CHARRIER, Dimitri**
**69130 Ecully (FR)**
- **FESTAZ, Xavier**
**01800 Villieu-Loyes-Mollon (FR)**

(74) Mandataire: **Ipsilon**
**Le Centralis**
**63, avenue du Général Leclerc**
**92340 Bourg-la-Reine (FR)**

(56) Documents cités:
**WO-A1-2010/023236 FR-A5- 2 111 059**
**JP-A- 2003 160 705**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08K 5/01, C08L 23/10;**
**C08L 23/10, C08K 5/01**

## Description

L'invention concerne une composition polymère présentant une résistance au blanchiment sous contrainte améliorée comprenant au moins un matériau polymère thermoplastique et un liquide diélectrique, un procédé de préparation de ladite composition polymère, un câble comprenant au moins une couche électriquement isolante obtenue à partir de ladite composition polymère, et un procédé de préparation dudit câble.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité sous-marin ou terrestre.

Un câble de transport d'énergie à moyenne ou à haute tension comprend généralement de l'intérieur vers l'extérieur :

- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ; et
- éventuellement une gaine de protection électriquement isolante entourant ladite couche semi-conductrice externe.

Dans ce type de câble, la couche électriquement isolante peut être une couche polymère à base d'un polyéthylène réticulé (XLPE). La réticulation est généralement effectuée lors de l'étape d'extrusion de la composition polymère autour de l'élément électriquement conducteur allongé. L'utilisation d'une polyoléfine réticulée permet de conduire à un câble pouvant fonctionner à une température supérieure à 70°C, voire égale à 90°C. Toutefois, plusieurs problèmes sont rencontrés. D'une part, les matériaux réticulés ne peuvent pas être recyclés. D'autre part, la réticulation (vulcanisation) pour produire une couche homogène requiert des conditions de réaction spécifiques (e.g. en termes de durée et de température) qui réduisent la vitesse de fabrication du câble et augmentent son coût de production. Enfin, la réticulation peut parfois débuter de façon prématurée dans l'extrudeuse et/ou la tête d'extrudeuse, induisant une dégradation de la qualité de la couche obtenue, notamment de ses propriétés diélectriques.

Des alternatives ont donc été proposées telles qu'une couche thermoplastique de polyéthylène de faible densité (LDPE) ou de haute densité (HDPE). Toutefois, un câble comportant une telle couche électriquement isolante ne peut fonctionner à une température supérieure à 70°C environ pour une couche thermoplastique de LDPE et supérieure à 80°C pour une couche thermoplastique HDPE, induisant une limitation de la puissance pouvant être transportée dans ledit câble et des méthodes de fabrication.

Des couches électriquement isolantes à base de polypropylène (e.g. copolymère de propylène hétérophasé) ont été proposées. Cependant, ces couches résistent difficilement au blanchiment sous contrainte (bien connu sous l'anglicisme « stress whitening »). Ainsi, quand ces polymères sont courbés et/ou subissent des chocs, la zone courbée et/ou qui a subi un choc, devient opaque et blanchâtre même lorsque le polymère est coloré. Ce phénomène peut par exemple intervenir lors de l'enroulement au moment de l'installation d'un câble. Or, le blanchiment sous contrainte n'est pas souhaité parce qu'il augmente le risque de fissures et/ou entraîne la formation de défauts dans la couche, induisant une dégradation des propriétés électriques de ladite couche.

Il est connu d'améliorer la résistance au blanchiment sous contrainte en ajoutant du polyéthylène. En particulier, EP 1510 547 A1 décrit une composition polymère comprenant de 70 à 98% en masse d'un copolymère de propylène hétérophasé comprenant une phase à base d'un homopolymère de propylène et une phase à base d'un copolymère de propylène et d'éthylène et/ou d'une ou plusieurs oléfines $\alpha$ en $C_4$-$C_{12}$ et de 2 à 30% en masse d'un polymère d'éthylène. Toutefois, cette composition polymère n'est pas optimisée en termes de résistance au blanchiment sous contrainte et de rigidité diélectrique pour être utilisée dans une couche électriquement isolante d'un câble à moyenne ou à haute tension.

WO 2010/023236 décrit une composition polymère ayant des propriétés de retard à la flamme comprenant une polyoléfine, un retardateur de flamme bromé, un amorceur radicalaire, et plus de 0,1 phr à au plus 0,5 phr d'un agent de synergie choisi parmi les composés de l'antimoine, les composés de l'étain, les composés du molybdène, les composés du zirconium, les composés du bore, les composés du zinc, et leurs mélanges. Le composé 2,3-diméthyl-2,3-diphényl-butane peut être utilisé comme amorceur radicalaire.

Ainsi, le but de la présente invention est de pallier les inconvénients de l'art antérieur et de fournir une composition polymère économique utilisant des matériaux recyclables et pouvant conduire à une couche électriquement isolante

présentant des propriétés mécaniques améliorées, notamment en termes de résistance au blanchiment sous contrainte, tout en garantissant de bonnes propriétés diélectriques, notamment en termes de rigidité diélectrique.

Le but de la présente invention est également de fournir un câble économique, en particulier à moyenne ou à haute tension, pouvant fonctionner à des températures supérieures à 70°C et présentant des propriétés mécaniques améliorées, notamment en termes de résistance au blanchiment sous contrainte, tout en garantissant de bonnes propriétés diélectriques, notamment en termes de rigidité diélectrique.

Les buts sont atteints par l'invention qui va être décrite ci-après.

L'invention a pour premier objet une composition polymère comprenant au moins un matériau polymère thermoplastique à base de polypropylène et un liquide diélectrique, caractérisée en ce que le liquide diélectrique comprend au moins un composé répondant à la formule (I) suivante :

$$R^1—A—R^2 \qquad (I)$$

dans laquelle $R^1$ et $R^2$, identiques ou différents, sont des groupes aryles non substitués et l'élément A représente une liaison simple ou un groupe alkylène, et en ce que le liquide diélectrique comprend au moins 50% en masse de composé(s) répondant à la formule (I), par rapport à la masse totale du liquide diélectrique.

Le groupe aryle peut comprendre un ou plusieurs cycles aromatiques, condensés ou non condensés, et de préférence non condensés.

Le groupe aryle peut comprendre de 5 à 20 atomes de carbone, et de préférence de 6 à 12 atomes de carbone.

Chaque cycle aromatique peut comprendre un ou plusieurs hétéroatomes tels qu'un atome d'azote, un atome de soufre ou un atome d'oxygène.

L'expression « groupes aryles non substitués » signifie que chacun des groupes aryles du composé de formule (I) ne comporte pas de substituant(s) monovalent(s), et notamment n'est pas substitué par un ou plusieurs groupes alkyles de formule $C_tH_{2t+1}$ (e.g. $1 \le t \le 5$) tels que des groupes méthyles.

Les groupes aryles du composé de formule (I) ne sont donc pas des groupes alkyl-aryles.

L'élément A peut être un groupe alkylène linéaire, cyclique ou ramifié, de préférence linéaire ou cyclique, et de préférence encore linéaire.

En particulier, l'élément A peut être un groupe alkylène ayant de 1 à 10 atomes de carbone, et de préférence ayant de 1 à 5 atomes de carbone.

De préférence , le groupe alkylène est un groupe $-(CH_2)_n-$ avec $1 \le n \le 10$ ; un groupe $-(CHR)_{n'}-$ avec $1 \le n' \le 5$ et R étant un groupe alkyle, de préférence ayant de 1 à 5 atomes de carbone ; un groupe statistique $-(CHR)_p-(CH_2)_m-$ (i.e. comprenant m $-CH_2-$ et p -CHR-), avec $1 \le p + m \le 9$, et R étant un groupe alkyle, de préférence ayant de 1 à 5 atomes de carbone ; ou un groupe statistique $-(CHR)_{p1}-(CH_2)_m-(CHR')_{p2}-$ (i.e. comprenant m $-CH_2-$, $p_1$ -CHR- et $p_2$ -CHR'-), avec $1 \le p_1 + m' + p_2 \le 8$, et R et R' étant des groupes alkyles différents, chacun ayant de préférence de 1 à 5 atomes de carbone, avec de préférence $1 \le p \le 4$, $1 \le m \le 8$, $1 \le p_1 \le 3$, $1 \le m' \le 6$ et $1 \le p_2 \le 3$.

Dans la présente invention, un groupe statistique signifie que les radicaux qui le constituent (e.g. $-CH_2-$, -CHR- et/ou -CHR'-) peuvent être aléatoirement positionnés au sein de l'élément A.

R (respectivement R') peut être un groupe méthyle, éthyle, propyle ou isopropyle.

Lorsque l'élément A (reliant les groupes aryles) est un groupe alkylène ramifié (e.g. présence d'au moins l'un quelconque des groupes R ou R'), il peut également être relié via la ramification (e.g. via R ou R') à $R^1$ et/ou $R^2$.

Le groupe aryle est de préférence un groupe phényle, un groupe naphtyle ou un groupe pyridyle, et de préférence encore un groupe phényle.

Selon une première variante de l'invention, au moins l'un desdits groupes $R^1$ ou $R^2$ du composé de formule (I) est un groupe phényle.

Selon une deuxième variante de l'invention, les deux groupes aryles comprennent chacun un groupe phényle.

Selon une troisième variante, les groupes $R^1$ et $R^2$ du composé de formule (I) sont chacun des groupes phényles.

Selon une forme de réalisation particulièrement préférée de l'invention, le composé de formule (I) peut être le 1,2-diphényléthane (i.e. $R^1 = R^2$ = phényle et A = $-CH_2-CH_2-$), le 1,1-diphényléthane (i.e. $R^1 = R^2$ = phényle et A = $-CH(CH_3)-$, le diphénylméthane (i.e. $R^1 = R^2$ = phényle et A = $-CH_2-$) ou le 1,2,3,4-tétrahydro-(1-phényléthyl)-naphtalène (i.e. $R^1 = R^2$ = phényle et A = $-CHCH_3-CH-(CH_2)_3-$).

Le liquide diélectrique est généralement liquide à 20-25°C environ.

Le liquide diélectrique comprend au moins 50% en masse environ d'au moins un composé de formule (I), et de préférence au moins 80% en masse environ d'au moins un composé de formule (I), par rapport à la masse totale du liquide diélectrique. Grâce à cette quantité minimum de composé(s) (I), la résistance au blanchiment sous contrainte est améliorée.

De préférence, le liquide diélectrique est uniquement constitué d'un composé de formule (I) ou de plusieurs composés de formule (I).

Le rapport du nombre d'atomes de carbone aromatique sur le nombre total d'atomes de carbone dans le liquide diélectrique peut être supérieur ou égal à 0,6 environ ; et de préférence supérieur à 0,6 environ.

Le rapport du nombre d'atomes de carbone aromatique sur le nombre total d'atomes de carbone dans le liquide diélectrique peut être déterminé selon la norme ASTM D3238 ou sur la base de la formule chimique.

La présence d'un composé de formule (I) dans la composition polymère permet d'améliorer la résistance au blanchiment sous contrainte de la couche électriquement isolante d'un câble électrique, tout en garantissant une bonne rigidité diélectrique. Par ailleurs, la présence d'un matériau polymère thermoplastique à base de polypropylène permet d'augmenter la température de fonctionnement du câble à 90°C-110°C.

De préférence, le liquide diélectrique a un point d'ébullition supérieur à 250°C environ.

Ainsi, le liquide diélectrique de la composition polymère de l'invention peut être manipulé sans risque à température ambiante (peu volatil) et aux températures requises par le procédé de mise en forme de la couche électriquement isolante (e.g. extrusion), tout en garantissant la formation d'un mélange intime homogène avec le matériau polymère de la composition polymère de l'invention.

Le matériau polymère thermoplastique à base de polypropylène peut comprendre au moins un homopolymère ou un copolymère de propylène ($P_1$), et éventuellement au moins un homopolymère ou un copolymère d'oléfine $\alpha$ (P2).

La combinaison de polymères $P_1$ et $P_2$ permet d'obtenir un matériau polymère thermoplastique présentant de bonnes propriétés mécaniques, notamment en termes de module élastique, et électriques.

En particulier, le copolymère de propylène $P_1$ peut être un copolymère statistique de propylène.

À titre d'exemples de copolymères de propylène $P_1$, on peut citer les copolymères de propylène et d'oléfine, l'oléfine étant notamment choisie parmi l'éthylène et une oléfine $\alpha$ différente du propylène.

L'oléfine $\alpha$ différente du propylène peut répondre à la formule $CH_2$=CH-$R^3$, dans laquelle $R^3$ est un groupe alkyle linéaire ou ramifié ayant de 2 à 10 atomes de carbone, et notamment être choisie parmi les oléfines suivantes : 1-butène, 1-pentène ; 4-méthyl-1-pentène, 1-hexène, 1-octène, 1-décène, 1-dodécène, et un de leurs mélanges.

L'oléfine du copolymère de propylène et d'oléfine représente de préférence au plus 15% en mole et de préférence encore au plus 10% en mole du copolymère.

Les copolymères de propylène et d'éthylène sont préférés à titre de copolymère de propylène $P_1$.

Le copolymère de propylène $P_1$ a de préférence un module élastique allant de 600 à 1200 MPa environ.

L'homopolymère de propylène $P_1$ a de préférence un module élastique allant de 1250 à 1600 MPa environ.

L'homopolymère ou le copolymère de propylène $P_1$ peut avoir une température de fusion supérieure à 130°C environ, de préférence supérieure à 140°C environ, et de préférence encore allant de 140 à 165°C environ.

En particulier, l'homopolymère de propylène $P_1$ peut avoir une température de fusion de 165°C environ et le copolymère de propylène $P_1$ peut avoir une température de fusion allant de 140 à 150°C environ.

L'homopolymère ou le copolymère de propylène $P_1$ peut avoir une enthalpie de fusion allant de 30 à 100 J/g environ.

En particulier, l'homopolymère de propylène $P_1$ peut avoir une enthalpie de fusion allant de 80 à 90 J/g environ et le copolymère de propylène $P_1$ peut avoir une enthalpie de fusion allant de 30 à 70 J/g environ.

L'homopolymère ou le copolymère de propylène $P_1$ peut avoir un indice de fluidité allant de 0,5 à 3 g/10 min, mesuré à 230°C environ avec une charge de 2,16 kg environ selon la norme ASTM D1238-00.

Selon une forme de réalisation préférée de l'invention, l'homopolymère ou copolymère de propylène $P_1$ représente de 40 à 70% en masse environ du matériau polymère thermoplastique à base de polypropylène.

L'oléfine $\alpha$ de l'homopolymère ou du copolymère d'oléfine $\alpha$ $P_2$ peut répondre à la formule $CH_2$=CH-$R^4$, dans laquelle $R^4$ est un atome d'hydrogène ou un groupe alkyle linéaire ou ramifié ayant de 1 à 12 atomes de carbone, et notamment être choisie parmi les oléfines suivantes : éthylène, propylène, 1-butène, isobutylène, 1-pentène, 4-méthyl-1-pentène, 1-hexène, 1-octène, 1-décène, 1-dodécène, et un de leurs mélanges.

L'oléfine $\alpha$ propylène, 1-hexène ou 1-octène est préférée.

L'homopolymère ou le copolymère d'oléfine $\alpha$ $P_2$ peut être un copolymère hétérophasé comprenant une phase thermoplastique de type propylène et une phase élastomère thermoplastique de type copolymère d'éthylène et d'une oléfine $\alpha$, un polyéthylène ou un de leurs mélanges.

La phase élastomère thermoplastique du copolymère hétérophasé peut représenter au moins 20% en masse environ, et de préférence au moins 45% en masse environ, par rapport à la masse totale du copolymère hétérophasé.

L'oléfine $\alpha$ de la phase élastomère thermoplastique du copolymère hétérophasé peut être le propylène.

Le polyéthylène peut être un polyéthylène linéaire basse densité. Dans la présente invention, l'expression « polyéthylène basse densité » signifie un polyéthylène linéaire ayant une densité allant de 0,91 à 0,925 environ.

Selon une forme de réalisation préférée de l'invention, l'homopolymère ou copolymère d'oléfine $\alpha$ $P_2$ représente de 30 à 60% en masse environ du matériau polymère thermoplastique à base de polypropylène.

Le matériau polymère thermoplastique de la composition polymère de l'invention est de préférence hétérophasé (i.e. il comprend plusieurs phases). La présence de plusieurs phases provient généralement du mélange de deux polyoléfines différentes, tel qu'un mélange de polypropylène et d'un copolymère de propylène ou de polyéthylène.

Selon une forme de réalisation particulièrement préférée de l'invention, le matériau polymère thermoplastique comprend un copolymère de propylène et d'éthylène [à titre d'homopolymère ou copolymère de propylène $P_1$] et un copolymère hétérophasé comprenant une phase thermoplastique de type propylène et une phase élastomère thermoplastique de type copolymère d'éthylène et de propylène [à titre d'homopolymère ou copolymère d'oléfine $\alpha$ $P_2$].

La composition polymère de l'invention comprend un mélange intime du liquide diélectrique et du matériau polymère thermoplastique (e.g. elle forme une phase homogène).

La concentration massique du liquide diélectrique dans la composition polymère est de préférence inférieure ou égale à la concentration massique de saturation dudit liquide diélectrique dans le matériau polymère thermoplastique.

La concentration massique de saturation à 20-25°C est généralement de l'ordre de 15 à 20% environ. Elle peut être déterminée par la méthode d'absorption liquide. En particulier, des plaques (e.g. de dimensions 200 mm x 200 mm x 0,5 mm) constituées du matériau polymère thermoplastique à base de polypropylène de la composition polymère sont préparées à partir des matières premières correspondantes, notamment par moulage. Des échantillons de ces plaques sont pesés (poids initial = $P_0$) puis immergés à 20°C environ dans le liquide diélectrique de la composition polymère. La concentration massique de saturation est mesurée en déterminant le changement de poids (en pourcentage) des échantillons après différentes durées d'immersion (e.g. 3, 6, 9, 12 et 15 jours) et après avoir nettoyé et séché leur surface (poids final = $P_f$). L'absorption du liquide diélectrique est déterminée selon la formule suivante :

$$\text{\% d'absorption de liquide diélectrique} = [(P_f - P_0)/P_0] \times 100$$

La concentration de saturation est atteinte lorsque $P_f$ montre une variation inférieure à 1% par rapport à l'augmentation du poids total qui correspond à $P_f$-$P_0$.

Selon un mode de réalisation particulier, le liquide diélectrique représente de 1% à 20% en masse environ, de préférence de 2 à 15% en masse environ, et de préférence encore de 3 à 12% en masse environ, par rapport à la masse totale de la composition polymère.

Selon un mode de réalisation particulier, le matériau polymère thermoplastique à base de polypropylène représente de 70% à 98% en masse environ, de préférence de 80 à 95% en masse environ, et de préférence encore de 88 à 97% en masse environ, par rapport à la masse totale de la composition polymère

La composition polymère peut comprendre en outre un ou plusieurs additifs.

Les additifs sont bien connus de l'homme du métier et peuvent être choisis parmi des antioxydants, des agents anti-UV, des agents anti-cuivre, des agents anti-arborescences d'eau, et un de leurs mélanges.

La composition polymère de l'invention peut typiquement comprendre de 0,01 à 5 % en masse environ, et de préférence de 0,1 à 2% en masse environ d'additifs, par rapport à la masse totale de la composition polymère.

Plus particulièrement, les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine et un de leurs mélanges.

À titre d'exemples de phénols encombrés, on peut citer le Pentaérythritol tétrakis(3-(3,5-di-tert-butyl-4-hydroxyphényl)propionate) (Irganox® 1010), l'octadécyl 3-(3,5-di-tert-butyl-4-hydroxyphényl)propionate (Irganox® 1076), le 1,3,5-triméthyl-2,4,6-tris(3,5-di-tert-butyl-4-hydroxybenzyl)benzène (Irganox® 1330), le 4,6-bis (octylthiométhyl)-o-crésol (Irgastab® KV10), le 2,2'-thiobis(6-tert-butyl-4-méthylphénol) (Irganox® 1081), le 2,2'- thiodiéthylène bis[3-(3,5-di-tert-butyl-4-hydroxyphényl) propionate] (Irganox® 1035), le 2,2'-méthylènebis(6-tert-butyl-4-méthylphénol), le 1,2-bis(3,5-di-tert-butyl-4-hydroxyhydrocinnamoyl) hydrazine (Irganox® MD 1024), ou le 2,2'-oxamido-bis(éthyl-3(3,5-di-tert-butyl-4-hydroxyphényle)propionate).

À titre d'exemples de thioesters, on peut citer le didodécyl-3,3'-thiodipropionate (Irganox® PS800), le distéaryl thiodipropionate (Irganox® PS802) ou le 4,6-bis(octylthiométhyle)-o-crésol (Irganox® 1520).

À titre d'exemples d'antioxydants à base de soufre, on peut citer le dioctadecyl-3,3'-thiodipropionate ou le didodecyl-3,3'-thiodipropionate.

À titre d'exemples d'antioxydants à base de phosphore, on peut citer le tris(2,4-di-*tert*-butyl-phényle)phosphite (Irgafos® 168) ou le bis(2,4-di-*tert*-butylphényl)pentaérythritol diphosphite (Ultranox® 626).

À titre d'exemples d'antioxydants de type amine, on peut citer les phénylène diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

À titre d'exemples de mélanges d'antioxydants, on peut citer l'Irganox B 225 qui comprend un mélange équimolaire d'Irgafos 168 et d'Irganox 1010 tels que décrits ci-dessus.

La composition polymère est une composition polymère thermoplastique.

Elle n'est donc pas réticulable.

En particulier, la composition polymère ne comprend pas d'agents de réticulation, d'agents de couplage de

type silane, de peroxydes et/ou d'additifs qui permettent une réticulation. En effet de tels agents dégradent le matériau polymère thermoplastique à base de polypropylène.

La composition polymère est de préférence recyclable.

L'invention a pour deuxième objet un procédé de préparation de la composition polymère conforme au premier objet, caractérisé en ce qu'il comprend au moins une étape i) de mélange d'un matériau polymère thermoplastique à base de polypropylène avec un liquide diélectrique tels que définis dans le premier objet de l'invention.

En particulier, le mélange est effectué selon les sous-étapes suivantes :

i-a) éventuellement le mélange d'un composé de formule (I) tel que défini dans le premier objet de l'invention avec le ou les additifs tels que définis dans le premier objet de l'invention, et

i-b) le mélange d'un matériau polymère thermoplastique à base de polypropylène tel que défini dans le premier objet de l'invention avec au moins un composé de formule (I) ou avec le mélange tel qu'obtenu dans la sous-étape précédente i-a) si la sous-étape i-a) existe.

Le matériau polymère thermoplastique à base de polypropylène de la sous-étape i-b) est généralement sous la forme de granules de polymère(s), notamment de granules d'au moins un homopolymère ou un copolymère de propylène $P_1$ et éventuellement d'au moins un homopolymère ou un copolymère d'oléfine $\alpha$ $P_2$ tels que définis dans le premier objet de l'invention.

Le mélange de la sous-étape i-a) peut être effectué à l'aide de n'importe quel appareil permettant de dissoudre le ou les additifs tels que définis dans le premier objet de l'invention (notamment lorsqu'ils sont sous la forme de poudres solides), au moins dans le composé de formule (I) du liquide diélectrique.

La sous-étape i-a) est de préférence effectuée à une température allant de 20 à 100°C environ, de préférence de 50 à 90°C environ, et de préférence encore à une température de 70°C environ.

La sous-étape i-a) dure généralement de 15 minutes à 1 heure, et de préférence de 20 à 30 minutes.

A l'issue de la sous-étape i-a), on obtient une solution stable et transparente.

Le mélange de la sous-étape i-b) peut être effectué en mélangeant le mélange obtenu à la sous-étape i-a) avec le matériau polymère thermoplastique à base de polypropylène ou les composés polymères qui le constituent, notamment à l'aide d'un mélangeur interne, notamment à rotors tangentiels ou à rotors engrenants, ou d'un mélangeur continu, notamment à vis ou contre rotatif double vis ou d'un mélangeur de type « Buss extruder ».

Au cours de la sous-étape i-b), la composition polymère de l'invention peut être mise en forme, notamment sous la forme de granules.

Pour ce faire, la température au sein du mélangeur est choisie suffisante pour obtenir le matériau polymère thermoplastique à l'état fondu. Puis, le mélange homogène peut être granulé, par des techniques bien connues de l'homme du métier. Ces granulés peuvent ensuite alimenter une extrudeuse pour fabriquer le câble de l'invention selon un procédé tel que défini ci-après.

L'invention a pour troisième objet un câble comprenant au moins un élément électriquement conducteur allongé, et au moins une couche électriquement isolante obtenue à partir d'une composition polymère telle que définie dans le premier objet de l'invention.

La couche électriquement isolante de l'invention est une couche non réticulée.

La couche électriquement isolante de l'invention est de préférence une couche recyclable.

La couche électriquement isolante de l'invention peut être une couche extrudée, notamment par des procédés bien connus de l'homme du métier.

Dans la présente invention, on entend par « couche électriquement isolante » une couche dont la conductivité électrique peut être d'au plus $1.10^{-9}$ S/m, et de préférence d'au plus $1.10^{-10}$ S/m (siemens par mètre) (à 25°C).

Le câble de l'invention concerne plus particulièrement le domaine des câbles électriques fonctionnant en courant continu (DC) ou en courant alternatif (AC).

La couche électriquement isolante de l'invention peut entourer l'élément électriquement conducteur allongé.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, et en un de leurs combinaisons.

Selon une forme de réalisation préférée de l'invention, le câble électrique peut comprendre :

- une première couche semi-conductrice entourant l'élément électriquement conducteur allongé,

- une couche électriquement isolante entourant la première couche semi-conductrice, ladite couche électriquement isolante étant telle que définie dans l'invention, et

- une deuxième couche semi-conductrice entourant la couche électriquement isolante.

Dans la présente invention, on entend par « couche semi-conductrice » une couche dont la conductivité électrique peut être d'au moins $1.10^{-9}$ S/m (siemens par mètre), de préférence d'au moins $1.10^{-3}$ S/m, et de préférence peut être inférieure à $1.10^{3}$ S/m (à 25°C).

Dans un mode de réalisation particulier, la première couche semi-conductrice, la couche électriquement isolante et la deuxième couche semi-conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

Le câble peut comprendre en outre une gaine électriquement isolante entourant la deuxième couche semi-conductrice, et peut être en contact physique direct avec celle-ci.

Le câble électrique peut comprendre en outre un écran métallique entourant la deuxième couche semi-conductrice. Dans ce cas, la gaine électriquement isolante entoure ledit écran métallique.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

L'invention a pour quatrième objet un procédé de fabrication d'un câble électrique conforme au troisième objet de l'invention, caractérisé en ce qu'il comprend au moins une étape 1) d'extrusion de la composition polymère conforme au premier objet de l'invention autour d'un élément électriquement conducteur allongé, pour obtenir une couche électriquement isolante (extrudée) entourant ledit élément électriquement conducteur allongé.

L'étape 1) peut être réalisée par des techniques bien connues de l'homme du métier, par exemple à l'aide d'une extrudeuse.

Lors de l'étape 1), la composition en sortie d'extrudeuse est dite « non réticulée », la température ainsi que le temps de mise en oeuvre au sein de l'extrudeuse étant optimisés en conséquent.

En sortie d'extrudeuse, on obtient donc une couche extrudée autour dudit élément électriquement conducteur, pouvant être ou non, directement en contact physique avec ledit élément électriquement conducteur allongé.

Le procédé ne comprend pas de préférence d'étape de réticulation de la couche obtenue à l'étape 1).

La figure 1 représente une vue schématique d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un élément électriquement conducteur 2 allongé central, notamment en cuivre ou en aluminium. Le câble d'énergie 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée non réticulée, obtenue à partir de la composition polymère selon l'invention.

Les couches semi-conductrices 3 et 5 sont des couches extrudées thermoplastiques (i.e. non réticulées).

La présence de l'écran métallique 6 et de la gaine extérieure de protection 7 est préférentielle, mais non essentielle, cette structure de câble étant en tant que telle bien connue de l'homme du métier.

## EXEMPLES

1. Compositions polymères

Le tableau 1 ci-dessous rassemble des compositions polymères dont les quantités des composés sont exprimées en pourcentages en poids par rapport au poids total de la composition polymère.
La composition C1 est une composition comparative, et la composition I1 est conforme à l'invention.

**TABLEAU 1**

| Compositions polymères | C1 | I1 | 12 |
|---|---|---|---|
| Copolymère de propylène | 50,00 | 50,00 | 50,00 |
| Polyéthylène linéaire de faible densité | 25,00 | 25,00 | 50,00 |
| Copolymère de propylène hétérophasé | 25,00 | 25,00 | 0 |
| 1,2,3,4-tétrahydro-(1-phényléthyl)-naphtalène | 0 | 7,70 | 7,70 |
| antioxydant | 0,3 | 0,3 | 0,3 |

L'origine des composés du tableau 1 est la suivante :

- copolymère de propylène statistique commercialisé par la société Borealis sous la référence Bormed RB 845 MO ;
- polyéthylène linéaire de faible densité commercialisé par la société Exxon Mobil Chemicals sous la référence LLDPE LL 1002 YB ;
- copolymère hétérophasé commercialisé par la société Basell Polyolefins sous la référence Adflex Q 200F ;
- liquide diélectrique constitué de 1,2,3,4-tétrahydro-(1-phényléthyl)-naphtalène commercialisée par la société Dow sous la référence Dowtherm RP ; et
- antioxydant commercialisé par la société Ciba sous la référence Irganox B 225 qui comprend un mélange équimolaire d'Irgafos 168 et d'Irganox 1010.

2. Préparation des couches non réticulées

Les compositions rassemblées dans le tableau 1 sont mises en oeuvre comme suit.
130 g de liquide diélectrique et 5 g d'antioxydant ont été mélangés dans un récipient en verre sous agitation.
Le mélange résultant a ensuite été mélangé avec 850 g de copolymère de propylène, 425 g de polyéthylène linéaire de faible densité et 425 g de copolymère hétérophasé dans un récipient, puis la composition polymère résultante a été extrudée à l'aide d'une extrudeuse à double vis (« Berstorff twin screw extruder ») à une température de 200°C environ.
Un couche comparative non conforme à l'invention a été préparée comme décrit ci-dessus mais uniquement à partir du mélange de polymères et d'oxydant.

3. Caractérisation des couches non réticulées

La résistance au blanchiment sous contrainte a été évaluée manuellement en courbant deux couches telles que préparées ci-avant respectivement à partir des compositions C1 et I1.
La rigidité diélectrique des couches a été mesurée à l'aide d'un dispositif comprenant deux électrodes demi-sphériques en inox de diamètre 20 mm environ (une électrode sous tension et l'autre à la masse) et une huile diélectrique commercialisée par la société Bluestar Silicones sous la référence Rhodorsil 604 V 50. Par définition, la rigidité diélectrique est le rapport entre la tension de claquage et l'épaisseur de l'isolant. La tension de claquage a été mesurée à 24°C environ, avec une humidité de 50% environ, en utilisant la méthode de montée en tension par palier. La tension appliquée était une tension alternative de fréquence 50 Hz environ et la vitesse de montée de tension était de 1 kV/s environ jusqu'au claquage. 12 mesures ont été effectuées pour chaque couche non réticulée.
La tangente delta (tanδ) (ou facteur de perte) des couches telles que préparées ci-avant été mesurée par

spectroscopie diélectrique à l'aide d'un appareil vendu sous la dénomination commerciale Alpha-A par la société Novocontrol Technologies.

La tangente de l'angle de perte donne une indication sur l'énergie dissipée dans un diélectrique sous forme de chaleur.

Les essais ont été effectués sur des couches d'épaisseur proche de 0,5 mm à 90°C, à une fréquence de 40 à 60 Hz avec une tension de 500 V adaptée selon l'épaisseur l'échantillon testé afin d'appliquer un champ électrique de 1 kV/mm.

4. Résultats

La couche obtenue à partir de la composition I1 n'a montré aucun blanchiment alors que la couche obtenue à partir de la composition comparative C1 s'est montré peu résistante puisque une marque blanche au niveau de la courbure est apparue immédiatement sous la contrainte manuelle appliquée.

Les résultats de rigidité diélectrique et de facteur de perte sont présentés dans le tableau 2 ci-dessous :

**TABLEAU 2**

| | **Rigidité diélectrique** (kV/mm) | **Tangente delta à 90°C** |
|---|---|---|
| **C1** | 129,25 | $7,5 \times 10^{-5}$ |
| **I1** | 127,11 | $8,2 \times 10^{-5}$ |

Par conséquent, les compositions polymères selon l'invention présentent de meilleures propriétés de résistance au blanchiment sous contrainte tout en garantissant de bonnes propriétés diélectriques.

## Revendications

1. Câble comprenant au moins un élément électriquement conducteur allongé, et au moins une couche électriquement isolante obtenue à partir d'une composition polymère, **caractérisé en ce que** la composition polymère comprend au moins un matériau polymère thermoplastique à base de polypropylène et un liquide diélectrique comprenant au moins un composé répondant à la formule (I) suivante :

$$R^1\text{—}A\text{—}R^2 \qquad (I)$$

dans laquelle $R^1$ et $R^2$, identiques ou différents, sont des groupes aryles non substitués et l'élément A représente une liaison simple ou un groupe alkylène, et

**en ce que** le liquide diélectrique comprend au moins 50% en masse de composé(s) répondant à la formule (I), par rapport à la masse totale du liquide diélectrique.

2. Câble selon la revendication 1, **caractérisé en ce que** le groupe aryle comprend de 5 à 20 atomes de carbone.

3. Câble selon la revendication 1 ou 2, **caractérisé en ce que** chacun des groupes aryles n'est pas substitué par un ou plusieurs groupes alkyles de formule $C_tH_{2t+1}$.

4. Câble selon l'une quelconque des revendications précédentes, **caractérisé en ce que** l'élément A est un groupe alkylène ayant de 1 à 10 atomes de carbone.

5. Câble selon l'une quelconque des revendications précédentes, **caractérisé en ce que** l'élément A est un groupe alkylène linéaire, cyclique ou ramifié.

6. Câble selon l'une quelconque des revendications précédentes, **caractérisé en ce qu'**au moins l'un desdits groupes $R^1$ ou $R^2$ du composé de formule (I) est un groupe phényle.

7. Câble selon l'une quelconque des revendications précédentes, **caractérisé en ce que** le composé de formule (I) est le diphényléthane, le diphénylméthane ou le 1,2,3,4-tétrahydro-(1-phényléthyl)-naphtalène.

**8.** Câble selon l’une quelconque des revendications précédentes, **caractérisé en ce que** le liquide diélectrique comprend au moins 80% en masse d’au moins un composé de formule (I), par rapport à la masse totale du liquide diélectrique.

**9.** Câble selon l’une quelconque des revendications précédentes, **caractérisé en ce que** le rapport du nombre d’atomes de carbone aromatique sur le nombre total d’atomes de carbone dans le liquide diélectrique est supérieur ou égal à 0,6.

**10.** Câble selon l’une quelconque des revendications précédentes, **caractérisé en ce que** le liquide diélectrique représente de 1% à 20% en masse, par rapport à la masse totale de la composition polymère.

**11.** Câble selon l’une quelconque des revendications précédentes, **caractérisé en ce que** le matériau polymère thermoplastique à base de polypropylène comprend au moins un homopolymère ou un copolymère de propylène $P_1$ et au moins un homopolymère ou un copolymère d’oléfine $\alpha$ $P_2$.

**12.** Câble selon la revendication 11, **caractérisé en ce que** le copolymère de propylène $P_1$ est un copolymère de propylène et d’éthylène.

**13.** Câble selon la revendication 11 ou 12, **caractérisé en ce que** l’homopolymère ou copolymère de propylène $P_1$ représente de 40 à 70% en masse du matériau polymère thermoplastique à base de polypropylène.

**14.** Câble selon l’une quelconque des revendications 11 à 13, **caractérisé en ce que** l’homopolymère ou le copolymère d’oléfine $\alpha$ $P_2$ est un copolymère hétérophasé comprenant une phase thermoplastique de type propylène et une phase élastomère thermoplastique de type copolymère d’éthylène et d’une oléfine $\alpha$, un polyéthylène ou un de leurs mélanges.

**15.** Câble selon l’une quelconque des revendications 11 à 14, **caractérisé en ce que** l’homopolymère ou copolymère d’oléfine $\alpha$ $P_2$ représente de 30 à 60% en masse du matériau polymère thermoplastique.

**16.** Câble selon l’une quelconque des revendications précédentes, **caractérisé en ce que** la couche électriquement isolante est une couche non réticulée.

**17.** Procédé de fabrication d’un câble électrique tel que défini à l’une quelconque des revendications précédentes, **caractérisé en ce qu’**il comprend au moins une étape 1) d’extrusion de la composition polymère autour d’un élément électriquement conducteur allongé, pour obtenir une couche électriquement isolante entourant ledit élément électriquement conducteur allongé.

**18.** Procédé selon la revendication 17, **caractérisé en ce que** la composition polymère est préparée selon un procédé comprenant au moins une étape i) de mélange du matériau polymère thermoplastique à base de polypropylène avec le liquide diélectrique.

## Patentansprüche

**1.** Kabel, umfassend mindestens ein verlängertes elektrisch leitendes Element und mindestens eine elektrisch isolierende Schicht, erhalten aus einer Polymerzusammensetzung, **dadurch gekennzeichnet, dass** die Polymerzusammensetzung mindestens ein thermoplastisches Polymermaterial auf der Grundlage von Polypropylen und eine dielektrische Flüssigkeit umfasst, umfassend mindestens eine Verbindung, der folgenden Formel (I);

$$R^1—A—R^2 \qquad (I)$$

wobei R’ und $R^2$, identisch oder verschieden, nicht substituierte Arylgruppen sind und das Element A eine einfache Bindung oder eine Alkylengruppe darstellt, und
dadurch, dass die dielektrische Flüssigkeit mindestens 50 Massenprozent Verbindung(en) der Formel (I) mit Bezug auf die Gesamtmasse der dielektrischen Flüssigkeit umfasst.

2. Kabel nach Anspruch 1, **dadurch gekennzeichnet, dass** die Arylgruppe 5 bis 20 Kohlenstoffatome umfasst.

3. Kabel nach Anspruch 1 oder 2, **dadurch gekennzeichnet, dass** jede der Arylgruppen nicht durch eine oder mehrere Alkylgruppen der Formel $C_tH_{2t+1}$.substituiert ist.

4. Kabel nach einem der vorhergehenden Ansprüche, **dadurch gekennzeichnet, dass** das Element A eine Alkylengruppe mit 1 bis 10 Kohlenstoffatomen ist.

5. Kabel nach einem der vorhergehenden Ansprüche, **dadurch gekennzeichnet, dass** das Element A eine lineare cyclische oder verzweigte Alkylengruppe ist.

6. Kabel nach einem der vorhergehenden Ansprüche, **dadurch gekennzeichnet, dass** mindestens eine der Gruppen R' oder $R^{2.}$ der Verbindung der Formel (I) eine Phenylgruppe ist.

7. Kabel nach einem der vorhergehenden Ansprüche, **dadurch gekennzeichnet, dass** die Verbindung der Formel (I) Diphenylehtan, Diphenylmethan, oder 1,2,3,4-Tetrahydro-(1-phenylethyl)-naphtalen ist.

8. Kabel nach einem der vorhergehenden Ansprüche, **dadurch gekennzeichnet, dass** die dielektrische Flüssigkeit mindestens 80 Massenprozent mindestens einer Verbindung der Formel (I) mit Bezug auf die Gesamtmasse der dielektrischen Flüssigkeit umfasst.

9. Kabel nach einem der vorhergehenden Ansprüche, **dadurch gekennzeichnet, dass** das Verhältnis der Anzahl von aromatischen Kohlenstoffatomen zur Gesamtanzahl von Kohlenstoffatomen in der dielektrischen Flüssigkeit höher als oder gleich wie 0,6 ist.

10. Kabel nach einem der vorhergehenden Ansprüche, **dadurch gekennzeichnet, dass** die dielektrische Flüssigkeit 1 bis 20 Massenprozent mit Bezug auf die Gesamtmasse der Polymerzusammensetzung umfasst.

11. Kabel nach einem der vorhergehenden Ansprüche, **dadurch gekennzeichnet, dass** das thermoplastische Polymermaterial auf der Grundlage von Polypropylen mindestens ein Homopolymer oder ein Propylencopolymer $P_1$ und mindestens ein Homopolymer oder ein Olefincopolymer $\alpha$ $P_2$ umfasst.

12. Kabel nach Anspruch 11, **dadurch gekennzeichnet, dass** das Propylencopolymer $P_1$ ein Propylen- und Ethylencopolymer ist.

13. Kabel nach Anspruch 11 oder 12, **dadurch gekennzeichnet, dass** das Propylenhomopolymer oder -copolymer $P_1$ 40 bis 70 Massenprozent des thermoplastischen Polymermaterials auf der Grundlage von Polypropylen darstellt.

14. Kabel nach einem der Ansprüche 11 bis 13, **dadurch gekennzeichnet, dass** das Olefin $\alpha$-Homopolymer oder -Copolymer $P_2$ ein heterophasisches Copolymer ist, umfassend eine thermoplastische Phase vom Typ Propylen und eine elastomere thermoplastische Phase vom Typ Ethylen- und Olefin $\alpha$-Copolymer, ein Polyethylen oder eine ihrer Mischungen.

15. Kabel nach einem der Ansprüche 11 bis 14, **dadurch gekennzeichnet, dass** das Olefin $\alpha$-Homopolymer oder -copolymer $P_2$ 30 bis 60 Massenprozent des thermoplastischen Polymermaterials darstellt.

16. Kabel nach einem der vorhergehenden Ansprüche, **dadurch gekennzeichnet, dass** die elektrisch isolierende Schicht eine nicht vernetzte Schicht ist.

17. Verfahren zur Herstellung eines elektrischen Kabels, wie in einem der vorhergehenden Ansprüche definiert, **dadurch gekennzeichnet, dass** es mindestens einen Schritt 1) des Extrudierens der Polymerzusammensetzung um ein längliches elektrisch leitendes Element umfasst, um eine elektrisch isolierende Schicht zu erhalten, die das längliche elektrisch leitende Element umgibt.

18. Verfahren nach Anspruch 17, **dadurch gekennzeichnet, dass** die Polymerzusammensetzung gemäß einem Verfahren hergestellt ist, umfassend mindestens einen Schritt i) des Mischens des thermoplastischen Polymermaterials auf der Grundlage von Polypropylen mit der dielektrischen Flüssigkeit.

## Claims

1. A cable comprising at least one elongate electrically conductive element, and at least one electrically insulating layer obtained from a polymer composition, **characterized in that** the polymer composition comprises at least one polypropylene-based thermoplastic polymer material and a dielectric fluid comprising at least one compound meeting following formula (I):

$$R^1—A—R^2 \qquad (I)$$

where $R^1$ and $R^2$, the same or different, are non-substituted aryl groups and element A represents a single bond or an alkylene group, and
**in that** the dielectric fluid comprises at least 50 % by weight of compound(s) meeting formula (I); relative to the total weight of the dielectric fluid.

2. The cable according to claim 1, **characterized in that** the aryl group has 5 to 20 carbon atoms.

3. The cable according to claim 1 or 2, **characterized in that** each of the aryl groups is not substituted by one or more alkyl groups of formula $C_tH_{2t+1}$.

4. The cable according to any of the preceding claims, **characterized in that** element A is an alkylene group having 1 to 10 carbon atoms.

5. The cable according to any of the preceding claims, **characterized in that** element A is a linear, cyclic or branched alkylene group.

6. The cable according to any of the preceding claims, **characterized in that** at least one of said groups $R^1$ or $R^2$ of the formula (I) compound is a phenyl group.

7. The cable according to any of the preceding claims, **characterized in that** the formula (I) compound is diphenylethane, diphenylmethane or 1,2,3,4-tetrahydro-(1-phenylethyl)-naphthalene.

8. The cable according to any of the preceding claims, **characterized in that** the dielectric fluid comprises at least 80 % by weight of at least one formula (I) compound, relative to the total weight of the dielectric fluid.

9. The cable according to any of the preceding claims, **characterized in that** the ratio of the number of aromatic carbon atoms to the total number of carbon atoms in the dielectric fluid is greater than or equal to 0.6.

10. The cable according to any of the preceding claims, **characterized in that** the dielectric fluid represents from 1 % to 20 % by weight, relative to the total weight of the polymer composition.

11. The cable according to any of the preceding claims, **characterized in that** the polypropylene-based thermoplastic polymer material comprises at least one homopolymer or a copolymer of propylene $P_1$ and at least one homopolymer, or an $\alpha$-olefin copolymer $P_2$.

12. The cable according to claim 11, **characterized in that** the propylene copolymer $P_1$ is a copolymer of propylene and ethylene.

13. The cable according to claim 11 or 12, **characterized in that** the homopolymer or propylene copolymer $P_1$ represents from 40 to 70 % by weight of the polypropylene-based thermoplastic polymer material.

14. The cable according to any of claims 11 to 13, **characterized in that** the homopolymer or $\alpha$-olefin copolymer $P_2$ is a heterophasic copolymer comprising a thermoplastic phase of propylene type and a thermoplastic elastomer phase of ethylene and $\alpha$-olefin copolymer type, a polyethylene, or one of the mixtures thereof.

15. The cable according to any of claims 11 to 14, **characterized in that** the homopolymer or $\alpha$-olefin copolymer $P_2$ represents from 30 to 60 % by weight of the thermoplastic polymer material.

**16.** The cable according to any of the preceding claims, **characterized in that** the electrically insulating layer is a non-crosslinked layer.

**17.** A method for manufacturing an electrical cable such as defined in any of the preceding claims, **characterized in that** it comprises at least one step 1) to extrude the polymer composition around an elongate electrically conductive element, to obtain an electrically insulating layer surrounding said elongate electrically conductive element.

**18.** The method according to claim 17, **characterized in that** the polymer composition is prepared following a method comprising at least one step i) to mix the polypropylene-based thermoplastic polymer material with the dielectric fluid.

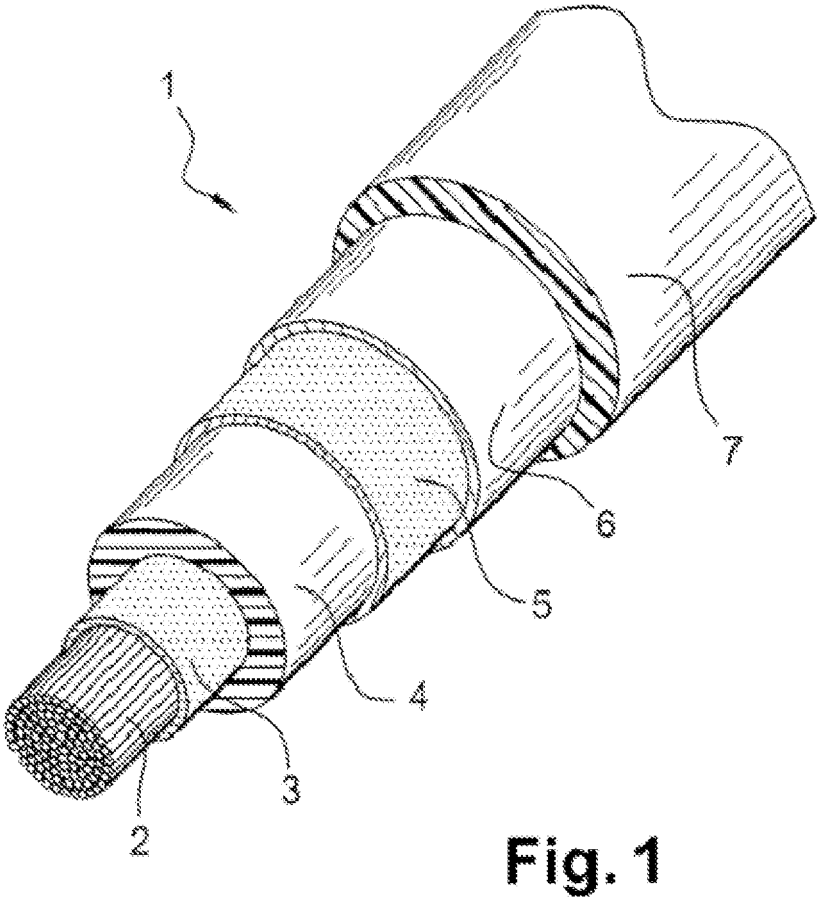


Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1510547 A1
- WO 2010023236 A